# EUROPEAN PATENT APPLICATION

(11) **EP 4 841 737 A1**
(43) Date of publication of application: **18.11.2026**
(21) Application number: 24938509.7
(22) Date of filing: 12.09.2024
(51) Int. Cl.: H01M 10/0566, H01M 10/05, H01M 10/0567

(54) **SECONDARY BATTERY AND ELECTRIC DEVICE**

(30) Priority: 17.05.2024 CN 202410619886
(71) Applicant: Contemporary Amperex Technology Co., Limited, Ningde, Fujian 352100 (CN)
(72) Inventor: WU, Zeli, Ningde, Fujian 352100 (CN); LI, Chen, Ningde, Fujian 352100 (CN); HAN, Changlong, Ningde, Fujian 352100 (CN); WANG, Fulin, Ningde, Fujian 352100 (CN); PENG, Shuting, Ningde, Fujian 352100 (CN); GUO, Jie, Ningde, Fujian 352100 (CN); WU, Qiao, Ningde, Fujian 352100 (CN)
(74) Representative: Lorenz Seidler Gossel Part. mbB
(86) International application number: PCT/CN2024/118541
(87) International publication number: WO 2025/236497

(57) **Abstract**

A secondary battery and an electric device. The secondary battery comprises: a positive electrode sheet; a negative electrode sheet; a separator, which is arranged between the positive electrode sheet and the negative electrode sheet; and an electrolyte, which comprises a solvent and an ethylene sulfate additive, the ethylene sulfate additive comprising a structural unit as shown in Formula (I), wherein R₁ and R₂ each independently comprise a hydrogen atom or a vinyl sulfate group, the solvent comprises cyclic carbonate, and on the basis of the total mass of the solvent, the mass percentage of the cyclic carbonate is less than or equal to 22%. In this way, the gas generation of a battery is reduced, the transmission rate of active metal ions under a low-temperature condition is increased, and the cycle capacity retention rate of the battery at a low temperature is improved.

## Description

### TECHNICAL FIELD

This application relates to the field of batteries, and specifically, to a secondary battery and an electric device.

### BACKGROUND

Batteries are not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. However, batteries generate a large amount of gas under high voltages, resulting in swelling of the batteries, thus reducing the service life of the batteries.

### SUMMARY

According to a first aspect of this application, a secondary battery is provided. The secondary battery includes: a positive electrode sheet; a negative electrode sheet; a separator, where the separator is disposed between the positive electrode sheet and the negative electrode sheet; and an electrolyte, where the electrolyte includes a solvent and an ethylene sulfate additive, and the ethylene sulfate additive includes a structural unit represented by Formula I: 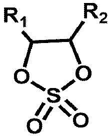 Formula I, where R₁ and R₂ each independently include one or both of a hydrogen atom or an ethylene sulfate group; the solvent includes cyclic carbonate; and based on a total mass of the solvent, a mass percentage of the cyclic carbonate is less than or equal to 22%. Thus, when the battery contains this electrolyte, a passivation film can be formed on a surface of a positive electrode, thereby reducing contact between a positive electrode active material and the electrolyte solvent, and reducing gas generation of the battery. In addition, a transport rate of active metal ions under a low-temperature condition is increased, and a cycling capacity retention rate of the battery at a low temperature is increased.

According to some embodiments of this application, the ethylene sulfate additive includes one or both of 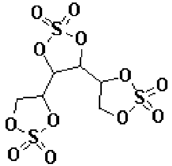 Formula I-1 or 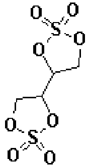 Formula I-2. Thus, the above types of additives can form the passivation film on the surface of the positive electrode, thereby reducing contact between the positive electrode active material and the electrolyte solvent, and reducing the probability that the solvent is catalytically decomposed by transition metal elements in the positive electrode active material to generate gas.

According to some embodiments of this application, based on a total mass of the electrolyte, a mass percentage of the ethylene sulfate additive is less than or equal to 2%. Thus, the influence of an excessively thick passivation film on the transport of active metal ions is reduced.

According to some embodiments of this application, based on the total mass of the electrolyte, the mass percentage of the ethylene sulfate additive is 0.1% to 1%. Thus, the influence of an excessively thick passivation film on the transport of active metal ions is reduced.

According to some embodiments of this application, based on the total mass of the electrolyte, a mass percentage of the cyclic carbonate is 5% to 22%. Thus, the content of the cyclic carbonate is within the above range, so that the number of cyclic carbonates bound to active metal ions during solvation is reduced, the energy required for desolvation of active metal ions is reduced, and the discharge performance of the battery under a low-temperature condition is improved.

According to some embodiments of this application, the cyclic carbonate includes one or more of ethylene carbonate, propylene carbonate, butylene carbonate, and vinylene carbonate. Thus, the cycling performance of the battery is improved.

According to some embodiments of this application, the cyclic carbonate includes ethylene carbonate. Thus, the cycling performance of the battery is improved.

According to some embodiments of this application, the solvent further includes chain carbonate. Thus, the stability of the electrolyte is improved, and the low-temperature discharge performance of the battery is improved.

According to some embodiments of this application, the chain carbonate includes at least one of diethyl carbonate and ethyl methyl carbonate. Thus, the stability of the electrolyte is improved, and the low-temperature discharge performance of the battery is improved.

According to some embodiments of this application, the electrolyte further includes a negative electrode film-forming additive.

According to some embodiments of this application, the negative electrode film-forming additive includes one or both of fluoroethylene carbonate and vinylene carbonate. Thus, a low-impedance solid electrolyte film (SEI film) is formed on a surface of a negative electrode, so that the internal resistance of the secondary battery is reduced, and the cycling performance of the secondary battery is improved.

According to some embodiments of this application, the secondary battery satisfies one or more of the following conditions: based on the total mass of the electrolyte, a mass percentage of the fluoroethylene carbonate is 0.1% to 3%; and based on the total mass of the electrolyte, a mass percentage of the vinylene carbonate is 0.1% to 1%. Thus, the internal resistance of the secondary battery is reduced, and the cycling performance of the secondary battery is improved.

According to some embodiments of this application, the positive electrode sheet includes a positive electrode active material, and the positive electrode active material includes a lithium-containing layered oxide. Thus, when the battery is in a high-voltage state, the probability that the lithium-containing layered oxide catalyzes decomposition of the electrolyte to generate gas is reduced by reducing contact between the lithium-containing layered oxide and the electrolyte.

According to some embodiments of this application, the positive electrode active material includes a transition metal element; and the positive electrode active material includes one or more of the nickel element, the cobalt element, the manganese element, and the aluminum element, where a molar proportion of the nickel element in all metal elements other than lithium is greater than or equal to 80%. Thus, a gram capacity of the positive electrode active material is increased, and the energy density of the secondary battery is increased.

According to some embodiments of this application, the transition metal element includes the nickel element, the cobalt element, and the manganese element.

According to some embodiments of this application, a ratio of the mass percentage of the ethylene sulfate additive in the electrolyte to the molar proportion of the nickel element in all metal elements other than lithium is 0.1 to 3. Thus, the energy density of the secondary battery is increased.

According to some embodiments of this application, based on a total mass of the positive electrode sheet, a mass percentage of the positive electrode active material is greater than or equal to 95%. Thus, the energy density of the battery is increased.

According to some embodiments of this application, the secondary battery satisfies one or more of the following conditions: a compacted density of the positive electrode sheet is 3.2 g/cm³ to 3.8 g/cm³; and a coating weight of the positive electrode sheet is 0.24 g/1540.25 mm² to 0.32 g/1540.25 mm². Thus, the energy density of the secondary battery is increased.

According to some embodiments of this application, an upper limit cut-off voltage of the secondary battery is greater than or equal to 4.2 V. Thus, when the upper limit cut-off voltage of the secondary battery is high, decomposition products of the sulfate additive can form a passivation film on the surface of the positive electrode, thereby reducing the probability of contact between the positive electrode active material and the electrolyte solvent, and reducing the probability that the solvent is catalytically decomposed by elements in the positive electrode active material to generate gas.

According to a second aspect of this application, an electric device is provided, including the secondary battery provided in the first aspect of this application.

Additional aspects and advantages of this application will be given in part in the following description, part of which will become apparent from the following description or be learned from the practice of the embodiments of this application.

### BRIEF DESCRIPTION OF DRAWINGS

Those of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a schematic diagram of a secondary battery according to an embodiment of this application.
FIG. 2 is an exploded view of the secondary battery according to an embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to an embodiment of this application shown in FIG. 4.
FIG. 6 is a schematic diagram of an electric device using a battery as a power source according to an embodiment of this application.

### Description of reference signs:

1. battery pack; 2. upper box body; 3. lower box body; 4. battery module; 5. battery; 51. housing; 52. electrode assembly; and 53. cover plate.

### DESCRIPTION OF EMBODIMENTS

The embodiments of the technical solutions of this application are described in detail below. The following embodiments are only used to illustrate the technical solutions of this application more clearly, and are therefore only used as examples and cannot be used to limit the protection scope of this application.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. Those skilled in the art explicitly and implicitly understand that the embodiments described herein may be combined with other embodiments.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps of this application may be performed sequentially or randomly, and are preferably performed sequentially. For example, the method includes steps (a) and (b), which means that the method may include steps (a) and (b) performed sequentially, or may include steps (b) and (a) performed sequentially. For example, the method mentioned above may further include step (c), which means that step (c) may be added to the method in any order. For example, the method may include steps (a), (b), and (c), may include steps (a), (c), and (b), or may include steps (c), (a), and (b).

Currently, from the perspective of market development, the application of secondary batteries is becoming more extensive. Secondary batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of secondary batteries, market demands for secondary batteries are also increasing.

A secondary battery includes a positive electrode sheet. The positive electrode sheet includes a positive electrode active material. For a positive electrode active material containing a transition metal element, when the secondary battery is at a high voltage, the catalytic activity of the transition metal element is high, making it easy to catalyze oxidative decomposition of an electrolyte solvent to generate gas, and resulting in swelling of the secondary battery. In the related art, more space can be reserved inside the secondary battery to accommodate the generated gas, but this method reduces a volumetric energy density of the secondary battery; or a coating layer is formed on only a surface of the positive electrode active material, so that the probability of contact between the positive electrode active material and the electrolyte is reduced through the coating layer, thereby reducing the probability that the electrolyte solvent is catalytically decomposed. Although this method can reduce gas generation, the coating layer on the surface of the positive electrode active material increases the difficulty for active metal ions (such as lithium ions) in shuttling on a positive electrode side, a migration rate of active metal ions in the entire secondary battery is reduced, and especially under a low-temperature condition, a discharge capacity retention rate of the secondary battery is further reduced.

This application provides a secondary battery including a positive electrode sheet, a negative electrode sheet, a separator, and an electrolyte. Formula I is added to the electrolyte, where Formula I has excellent storage performance, and decomposition products of Formula I, such as lithium sulfate and lithium sulfite, can form a passivation film on a surface of a positive electrode, thereby reducing contact between a positive electrode active material and an electrolyte solvent, and reducing the probability that the solvent is catalytically decomposed by elements in the positive electrode active material to generate gas. In addition, to compensate for the influence of the formed passivation film on the transport of active metal ions, the content of the cyclic carbonate in the electrolyte is limited, so that the content of the cyclic carbonate bound to active metal ions is reduced, the energy required for solvated active metal ions to shed the solvent is reduced, and the difficulty for the solvated active metal ions in becoming free active metal ions is reduced, thereby increasing the transport rate of active metal ions. Even under a low-temperature condition, a rate at which solvated active metal ions become free active metal ions can also be increased, thereby increasing the transport rate of active metal ions under a low-temperature condition, and increasing a cycling capacity retention rate of the secondary battery at a low temperature.

The secondary battery provided in this application can be used in electric devices that use secondary batteries as power sources or in various energy storage systems that use batteries as energy storage elements. Electric devices may include but are not limited to mobile phones, tablets, laptop computers, electric toys, electric tools, electric bicycles, electric vehicles, ships, and spacecraft. The electric toys may include fixed or mobile electric toys, such as game consoles, electric toy cars, electric toy ships, and electric toy airplanes. The spacecraft may include airplanes, rockets, space shuttles, spaceships, and the like.

### [Secondary battery]

According to a first aspect of this application, a secondary battery is provided. The secondary battery includes a positive electrode sheet, a negative electrode sheet, a separator, and an electrolyte. The separator is disposed between the positive electrode sheet and the negative electrode sheet. The electrolyte includes a solvent and an ethylene sulfate additive. The ethylene sulfate additive includes a structural unit represented by Formula I: 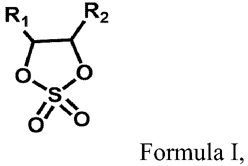 where R₁ and R₂ each independently include one or both of a hydrogen atom or an ethylene sulfate group. The solvent includes cyclic carbonate. Based on a total mass of the solvent, a mass percentage of the cyclic carbonate is less than or equal to 22%.

According to the secondary battery provided in this application, the ethylene sulfate additive having a structural unit represented by Formula I is added to the electrolyte, so that a passivation film is formed on a surface of a positive electrode, thereby reducing contact between a positive electrode active material and the electrolyte solvent, and reducing the probability that the solvent is catalytically decomposed by elements in the positive electrode active material to generate gas. In addition, the content of the cyclic carbonate in the electrolyte is limited, so that the content of cyclic carbonate molecules bound to active metal ions is reduced, the energy required for solvated active metal ions to shed the solvent is reduced, and the difficulty for the solvated active metal ions in becoming free active metal ions is reduced, thereby increasing a transport rate of active metal ions. Even under a low-temperature condition, a rate at which solvated active metal ions become free active metal ions can also be increased, thereby increasing the transport rate of active metal ions under a low-temperature condition, and improving the discharge capacity of the secondary battery at a low temperature.

In this application, the ethylene sulfate additive can be identified by liquid nuclear magnetic resonance NMR. In a glove box filled with nitrogen, 500 µL of a deuterated reagent is added to a nuclear magnetic tube, 100 µL of an electrolyte sample is added to the nuclear magnetic tube, the nuclear magnetic tube is shaken to dissolve the electrolyte into the deuterated reagent, and testing is performed using a desktop nuclear magnetic resonance spectrometer X-Pulse.

In this application, the content of the cyclic carbonate in the electrolyte can be tested using organic gas chromatography. Specifically, testing can be performed with reference to GB/T9722-200.

It should be noted that, since the secondary battery undergoes processes such as formation and cycling, the ethylene sulfate additive and the cyclic carbonate are consumed. For example, at the end of the service life of the battery, the ethylene sulfate additive may be completely consumed, and 2% of the amount of cyclic carbonate added may be consumed.

According to some embodiments of this application, based on the total mass of the solvent, the mass percentage of the cyclic carbonate is less than or equal to 22%. For example, the mass percentage of the cyclic carbonate may be 22%, 20%, 18%, 16%, 14%, 12%, 10%, 8%, 6%, or 4%, or a range defined by any of the above values. Thus, the content of the cyclic carbonate is within the above range, the number of cyclic carbonate molecules bound to one active metal ion during solvation of active metal ions is reduced, the energy required for desolvation is reduced, the desolvation rate of active metal ions can be increased under a low-temperature condition, free active metal ions can quickly pass through an interface film, the interface impedance is reduced, and the low-temperature discharge capacity is improved. According to some specific embodiments of this application, based on a total mass of the electrolyte, a mass percentage of the cyclic carbonate is 5% to 22%.

According to some embodiments of this application, the cyclic carbonate may include one or more of ethylene carbonate, propylene carbonate, butylene carbonate, and vinylene carbonate. Thus, the above types of cyclic carbonates are used as electrolyte solvents to prolong the cycle life of the battery. According to some specific embodiments of this application, the cyclic carbonate may include ethylene carbonate.

According to some embodiments of this application, the solvent may further include chain carbonate. Thus, the stability of the electrolyte is improved, and the low-temperature discharge performance of the secondary battery is improved.

As an example, the chain carbonate may include at least one of diethyl carbonate (DEC) and ethyl methyl carbonate (EMC).

According to some embodiments of this application, the number of structural units represented by Formula I in the ethylene sulfate additive may be 2, 3, or 4.

According to some embodiments of this application, the ethylene sulfate additive includes one or both of 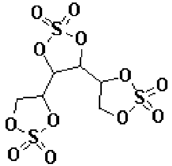 Formula I-1 or 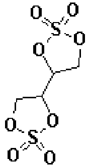 Formula I-2.

According to some embodiments of this application, the ethylene sulfate additive includes 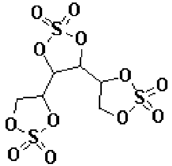 Formula I-1.

Thus, the additive represented by Formula I-1 and/or Formula I-2 is added to the electrolyte, so that the passivation film can be formed on the surface of the positive electrode, thereby reducing contact between the positive electrode active material and the electrolyte solvent, and reducing the probability that the solvent is catalytically decomposed by elements in the positive electrode active material to generate gas.

According to some embodiments of this application, based on the total mass of the electrolyte, a mass percentage of the ethylene sulfate additive is less than or equal to 2%. For example, the mass percentage of the ethylene sulfate additive may be 2%, 1.5%, 1%, 0.8%, 0.6%, 0.4%, 0.2%, 0.1%, 0.08%, or 0.06%, or a range defined by any of the above values. Thus, the content of the ethylene sulfate additive is within the above range, so that the passivation film is formed on the surface of the positive electrode, thereby reducing contact between the positive electrode active material and the electrolyte, reducing the risk of an excessively thick passivation film, and reducing the influence of an excessively thick passivation film on the shuttling of active metal ions on the positive electrode side. According to some specific embodiments of this application, based on the total mass of the electrolyte, the mass percentage of the ethylene sulfate additive is 0.1% to 1%.

According to some embodiments of this application, the electrolyte further includes a negative electrode film-forming additive. Thus, a low-impedance solid electrolyte film (SEI film) is formed on a surface of a negative electrode, so that the internal resistance of the secondary battery is reduced, and the cycling performance of the secondary battery is improved.

As an example, the negative electrode film-forming additive includes one or both of fluoroethylene carbonate and vinylene carbonate.

According to some embodiments of this application, based on the total mass of the electrolyte, a mass percentage of the fluoroethylene carbonate may be 0.1% to 3%. For example, the mass percentage of the fluoroethylene carbonate may be 0.1%, 0.5%, 1%, 1.5%, 2%, 2.5%, or 3%, or a range defined by any of the above values. Thus, the low-impedance SEI film is formed on the surface of the negative electrode, so that the internal resistance of the secondary battery is reduced, and the cycling performance of the secondary battery is improved.

According to some embodiments of this application, based on the total mass of the electrolyte, a mass percentage of the vinylene carbonate may be 0.1% to 1%. For example, the mass percentage of the vinylene carbonate may be 0.1%, 0.3%, 0.5%, 0.7%, 0.9%, or 1%, or a range defined by any of the above values. Thus, the low-impedance SEI film is formed on the surface of the negative electrode, so that the internal resistance of the secondary battery is reduced, and the cycling performance of the secondary battery is improved.

According to some embodiments of this application, the positive electrode sheet includes a positive electrode active material, and the positive electrode active material includes a lithium-containing layered oxide. Thus, the electrolyte includes the ethylene sulfate additive, and the ethylene sulfate additive can undergo passivation to form a film on the surface of the positive electrode, so that the probability of contact between the lithium-containing layered oxide and the electrolyte can be reduced, thereby reducing the risk that the lithium-containing layered oxide catalyzes decomposition of the electrolyte to generate gas.

According to some embodiments of this application, the positive electrode active material includes a transition metal element; and the positive electrode active material includes one or more of the nickel element, the cobalt element, the manganese element, and the aluminum element, where a molar proportion of the nickel element in all metal elements other than lithium is greater than or equal to 80%. Thus, a gram capacity of the positive electrode active material can be increased, and the energy density of the secondary battery can be increased. When an upper limit cut-off voltage of the secondary battery is greater than or equal to 4.2 V, the catalytic activity of the nickel element is high. The ethylene sulfate additive having a structural unit represented by Formula I is added to the electrolyte, so that the passivation film is formed on the surface of the positive electrode, thereby reducing contact between the positive electrode active material and the electrolyte solvent, and reducing the probability that the solvent is catalytically decomposed by the nickel element in the positive electrode active material to generate gas. In addition, the content of the cyclic carbonate in the electrolyte is limited, so that the content of cyclic carbonate molecules bound to active metal ions is reduced, the energy required for solvated active metal ions to shed the solvent is reduced, and the difficulty for the solvated active metal ions in becoming free active metal ions is reduced, thereby increasing the transport rate of active metal ions. Even under a low-temperature condition, a rate at which solvated active metal ions become free active metal ions can be increased, thereby increasing the transport rate of active metal ions under a low-temperature condition, and improving the discharge capacity of the secondary battery at a low temperature.

As an example, the molar proportion of the nickel element in all metal elements other than lithium may be 80%, 82%, 84%, 86%, 88%, 90%, 92%, or 94%, or a range defined by any of the above values. Thus, the content of the nickel element in the positive electrode active material is high, so that the gram capacity of the positive electrode active material can be increased. When the upper limit cut-off voltage of the battery is greater than or equal to 4.2 V (that is, the working voltage of the secondary battery is increased), the energy density of the secondary battery can be further increased. In this case, to reduce side reactions between the nickel element and the electrolyte due to high catalytic activity under a high working voltage (for example, solvent decomposition is catalyzed to generate gas), the ethylene sulfate additive having a structural unit represented by Formula I is added to the electrolyte, so that the passivation film can be formed on the surface of the positive electrode, thereby reducing contact between the high-nickel positive electrode active material and the electrolyte solvent, and reducing the probability that the solvent is catalytically decomposed by the nickel element in the positive electrode active material to generate gas. In addition, the content of the cyclic carbonate in the electrolyte is limited, so that the content of cyclic carbonate molecules bound to active metal ions is reduced, the energy required for solvated active metal ions to shed the solvent is reduced, and the difficulty for the solvated active metal ions in becoming free active metal ions is reduced, thereby increasing the transport rate of active metal ions. Even under a low-temperature condition, a rate at which solvated active metal ions become free active metal ions can be increased, thereby increasing the transport rate of active metal ions under a low-temperature condition, and improving the discharge capacity of the secondary battery at a low temperature.

According to some specific embodiments of this application, the transition metal element includes the nickel element, the cobalt element, and the manganese element. Thus, the gram capacity of the positive electrode active material can be increased, and the energy density of the secondary battery can be increased.

According to some embodiments of this application, the positive electrode active material includes one or more of LiNi_{0.8}Co_{0.1}Mn_{0.1}O₂ (NCM811), LiNi_{0.88}Co_{0.06}Mn_{0.06}O₂, LiNi_{0.92}Co_{0.04}Mn_{0.04}O₂, LiNi_{0.98}Co_{0.01}Mn_{0.01}O₂, and LiNi_{0.9}Co_{0.05}Mn_{0.05}O₂.

According to some embodiments of this application, a ratio of the mass percentage of the ethylene sulfate additive in the electrolyte to the molar proportion of the nickel element in all metal elements other than lithium is 0.1 to 3. For example, the ratio may be 0.1, 0.5, 1, 1.5, 2, 2.5, or 3, or a range defined by any of the above values.

According to some embodiments of this application, based on a total mass of the positive electrode sheet, a mass percentage of the positive electrode active material is greater than or equal to 95%. For example, the mass percentage of the positive electrode active material may be 95%, 96%, 97%, 98%, or 99%, or a range defined by any of the above values. Thus, the energy density of the battery is increased.

According to some embodiments of this application, a compacted density of the positive electrode sheet may be 3.2 g/cm³ to 3.8 g/cm³. For example, the compacted density of the positive electrode sheet may be 3.2 g/cm³, 3.4 g/cm³, 3.6 g/cm³, or 3.8 g/cm³, or a range defined by any of the above values.

In this application, the compacted density of the positive electrode sheet can be calculated by a formula P = m/v, where m is the weight of a positive electrode film layer in g; and v is the volume of the positive electrode film layer in cm³. The volume v of the positive electrode film layer can be tested by a product of an area Ar of the positive electrode film layer and a thickness of the positive electrode film layer.

According to some embodiments of this application, a coating weight of the positive electrode sheet is 0.24 g/1540.25 mm² to 0.32 g/1540.25 mm². For example, the coating weight of the positive electrode sheet may be 0.24 g/1540.25 mm², 0.26 g/1540.25 mm², 0.28 g/1540.25 mm², 0.3 g/1540.25 mm², or 0.32 g/1540.25 mm², or a range defined by any of the above values.

Thus, the compacted density and coating weight of the positive electrode sheet are within the above ranges, so that the energy density of the secondary battery is increased.

### [Positive electrode sheet]

As an example, the positive electrode sheet includes a positive electrode current collector and a positive electrode active material layer disposed on at least one surface of the positive electrode current collector, and the positive electrode active material layer includes the above positive electrode active material.

As an example, the positive electrode current collector has two opposite surfaces in its thickness direction, and the positive electrode active material layer is provided on either or both of the two opposite surfaces of the positive electrode current collector.

In some embodiments, the positive electrode current collector may be a metal foil or a composite current collector. For example, as the metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode active material layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer further optionally includes a conductive agent. As an example, the conductive agent may include at least one of superconducting carbon, acetylene black, carbon black, Ketjen black, carbon dots, carbon nanotubes, graphene, and carbon nanofiber.

In some embodiments, the positive electrode sheet may be prepared in the following method: the components used for preparing the positive electrode sheet, such as the positive electrode active material, the conductive agent, the binder, and any other components, are dispersed in a solvent (for example, N-methylpyrrolidone) to form a positive electrode slurry. Then, the positive electrode slurry is applied on the positive electrode current collector, followed by processes such as drying and cold pressing, to obtain the positive electrode sheet.

Typically, a battery includes a positive electrode sheet, a negative electrode sheet, an electrolyte, and a separator. During charging and discharging of the battery, active ions are intercalated and deintercalated back and forth between the positive electrode sheet and the negative electrode sheet. The electrolyte plays a role in conducting ions between the positive electrode sheet and the negative electrode sheet. The separator is disposed between the positive electrode sheet and the negative electrode sheet, mainly playing a role in preventing short circuit between positive and negative electrodes, and allowing ions to pass through.

### [Negative electrode sheet]

The negative electrode sheet includes a negative electrode current collector and a negative electrode active material layer disposed on at least one surface of the negative electrode current collector, and the negative electrode active material layer includes a negative electrode active material.

As an example, the negative electrode current collector has two opposite surfaces in its thickness direction, and the negative electrode active material layer is disposed on either or both of the two opposite surfaces of the negative electrode current collector.

In some embodiments, the negative electrode current collector may be a metal foil or a composite current collector. For example, as the metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments, the negative electrode active material may be a negative electrode active material for batteries known in the art. As an example, the negative electrode active material may include at least one of the following materials: artificial graphite, natural graphite, soft carbon, hard carbon, a silicon-based material, a tin-based material, titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. When the battery is a lithium-ion battery, lithium titanate is used as the titanate; when the battery is a sodium-ion battery, sodium titanate is used as the titanate. However, this application is not limited to these materials, and other conventional materials that can be used as negative electrode active materials for batteries may also be used. These negative electrode active materials may be used alone or in combination of two or more.

In some embodiments, the negative electrode active material layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode active material layer further optionally includes other additives, such as a thickener (such as sodium carboxymethyl cellulose (CMC-Na)).

In some embodiments, the negative electrode sheet may be prepared in the following method: the components used for preparing the negative electrode sheet, such as the negative electrode active material, the conductive agent, the binder, and any other components, are dispersed in a solvent (for example, deionized water) to form a negative electrode slurry. Then, the negative electrode slurry is applied on the negative electrode current collector, followed by processes such as drying and cold pressing, to obtain the negative electrode sheet.

### [Electrolyte]

The electrolyte plays a role in conducting ions between the positive electrode sheet and the negative electrode sheet.

In some embodiments, the electrolyte includes an electrolytic salt, an ethylene sulfate additive, and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the electrolyte further optionally includes an additive capable of improving some performance of the battery, for example, an additive for improving the overcharge performance of the battery and an additive for improving the high-temperature performance or low-temperature performance of the battery.

### [Separator]

In some embodiments, the battery further includes a separator. This application has no particular limitation on the type of separator, and any known porous separator with good chemical stability and mechanical stability may be used.

In some embodiments, a material of the separator may be selected from at least one of glass fiber, non-woven fabric, polyethylene, polypropylene, and polyvinylidene fluoride. The separator may be a single-layer film or a multi-layer composite film, without particular limitation. When the separator is a multi-layer composite film, materials of the layers may be the same or different, without particular limitation.

In some embodiments, the positive electrode sheet, the negative electrode sheet, and the separator may be made into an electrode assembly by a winding process or a lamination process.

In some embodiments, the battery may include an outer package. The outer package may be used to encapsulate the above electrode assembly and electrolyte.

In some embodiments, the outer package of the battery may be a hard shell, such as a hard plastic shell, an aluminum shell, or a steel shell. The outer package of the battery may alternatively be a soft pack, for example, a soft pouch. A material of the soft pack may be plastic. Examples of the plastic include polypropylene, polybutylene terephthalate, polybutylene succinate, and the like.

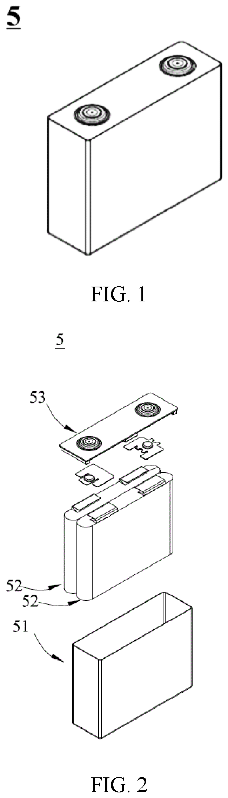

This application has no particular limitation on the shape of the battery. The battery may be cylindrical, rectangular, or of any other shapes. For example, FIG. 1 shows a battery 5 with a rectangular structure as an example.

In some embodiments, referring to FIG. 2, the outer package may include a housing 51 and a cover plate 53. The housing 51 may include a bottom plate and side plates connected to the bottom plate. The bottom plate and the side plates enclose an accommodating cavity. The housing 51 has an opening in communication with the accommodating cavity. The cover plate 53 can cover the opening to close the accommodating cavity. A positive electrode sheet, a negative electrode sheet, and a separator may form an electrode assembly 52 through a winding process or a lamination process. The electrode assembly 52 is encapsulated in the accommodating cavity. The electrolyte infiltrates the electrode assembly 52. One or more electrode assemblies 52 are included in the battery 5, which can be selected by those skilled in the art according to specific actual needs.

In some embodiments, the battery may be assembled into a battery module. One or more batteries are included in the battery module, and the specific quantity can be selected by those skilled in the art according to the application and capacity of the battery module.

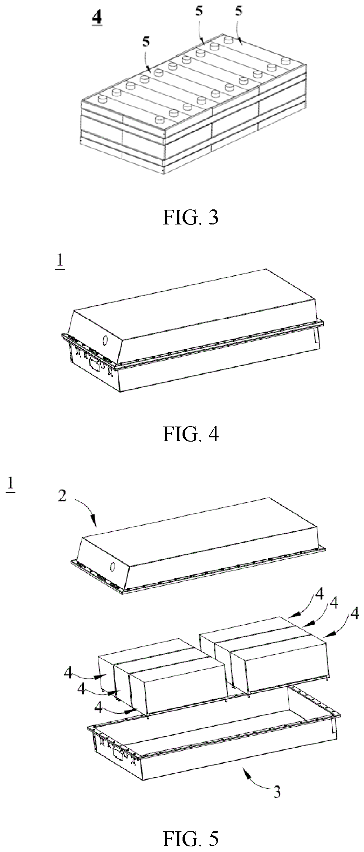

FIG. 3 shows a battery module 4 as an example. Referring to FIG. 3, in the battery module 4, a plurality of batteries 5 may be arranged in sequence along a length direction of the battery module 4. Certainly, the plurality of batteries 5 may alternatively be arranged in any other manner. Further, the plurality of batteries 5 can be fixed by fasteners.

Optionally, the battery module 4 may further include an enclosure having an accommodating space, and the plurality of batteries 5 are accommodated in the accommodating space.

In some embodiments, the above battery module may alternatively be assembled into a battery pack. One or more battery modules are included in the battery pack, and the specific quantity can be selected by those skilled in the art according to the application and capacity of the battery pack.

FIGs. 4 and 5 show a battery pack 1 as an example. Referring to FIGs. 4 and 5, the battery pack 1 may include a battery box and a plurality of battery modules 4 disposed in the battery box. The battery box includes an upper box body 2 and a lower box body 3. The upper box body 2 can fit the lower box body 3 to form a closed space for accommodating the battery modules 4. The plurality of battery modules 4 can be arranged in the battery box in any manner.

According to a second aspect of this application, an electric device is further provided. The electric device includes at least one of the battery, the battery module, or the battery pack provided in this application. The battery, the battery module, or the battery pack can be used as a power source for the electric device or as an energy storage unit for the electric device. The electric device may include a mobile device (such as a mobile phone and a laptop computer), an electric vehicle (such as a battery electric vehicle, a hybrid electric vehicle, a plug-in hybrid electric vehicle, an electric bicycle, an electric scooter, an electric golf cart, and an electric truck), an electric train, a ship, a satellite system, an energy storage system, but is not limited thereto.

As the electric device, a battery, a battery module, or a battery pack can be selected according to its usage requirements.

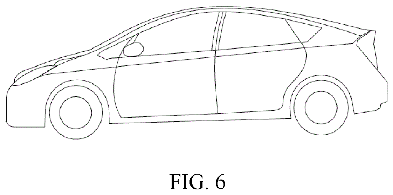

FIG. 6 shows an electric device as an example. The electric device is a battery electric vehicle, a hybrid electric vehicle, a plug-in hybrid electric vehicle, or the like. To meet the requirements of the electric device for high power and high energy density of the battery, a battery pack or a battery module can be used.

As another example, an apparatus may be a mobile phone, a tablet computer, a laptop computer, or the like. Such apparatus is generally required to be light and thin and may use a battery as its power source.

To describe the technical problems solved by the embodiments of this application, technical solutions, and beneficial effects more clearly, the following further describes this application in detail with reference to the embodiments and accompanying drawings. Apparently, the described embodiments are only some rather than all of the embodiments of this application. The following description of at least one exemplary embodiment is merely illustrative and definitely is not construed as any limitation on this application or on use of this application. All other embodiments obtained by those of ordinary skill in the art based on the embodiments of this application without creative efforts shall fall within the protection scope of this application.

### Example 1

### 1. Preparation of positive electrode sheet

An aluminum foil with a thickness of 13 µm was used as a positive electrode current collector. A positive electrode active material LiNi_{0.8}Co_{0.1}Mn_{0.1}O₂ (NCM811), a conductive agent carbon black, and a binder polyvinylidene fluoride (PVDF) were fully stirred and mixed in an appropriate amount of solvent N-methylpyrrolidone (NMP) at a weight ratio of 97.5:1.4:1.1 to form a uniform positive electrode slurry. Then, the positive electrode slurry was uniformly applied on a surface of the positive electrode current collector aluminum foil, followed by drying and cold pressing, to obtain a positive electrode sheet.

### 2. Preparation of negative electrode sheet

A copper foil with a thickness of 6 µm was used as a negative electrode current collector. A negative electrode active material including artificial graphite and silicon oxide SiO (where a mass ratio of artificial graphite to SiO was 95:5), a binder styrene-butadiene rubber (SBR), a thickener sodium carboxymethyl cellulose (CMC-Na), and a conductive agent carbon black (Super P) were fully stirred and mixed in an appropriate amount of solvent deionized water at a weight ratio of 96.2:1.8:1.2:0.8 to form a uniform negative electrode slurry. Then, the negative electrode slurry was uniformly applied on a surface of the negative electrode current collector copper foil, followed by drying and cold pressing, to obtain a negative electrode sheet.

### 3. Separator

A porous polyethylene (PP) film was used as a separator.

### 4. Preparation of electrolyte

In an environment with a water content of less than 10 ppm, ethylene carbonate EC (cyclic) and ethyl methyl carbonate EMC (chain) were mixed at a volume ratio of 22:78 to obtain an electrolyte solvent. Then, the electrolyte solvent was mixed with LiPF₆ and an ethylene sulfate additive represented by Formula I-1, where a mass concentration of LiPF₆ was 12.5%, and a mass percentage of the ethylene sulfate additive was 0.5%.

### 5. Preparation of lithium-ion secondary battery

The above positive electrode sheet, separator, and negative electrode sheet are stacked in sequence, so that the separator is located between the positive electrode sheet and the negative electrode sheet for separation. Then, the resulting stack was wound to obtain an electrode assembly. The electrode assembly was placed in an outer packaging shell and dried. Then, the electrolyte was injected, and processes such as vacuum packaging, standing, formation, and shaping were performed to obtain a lithium-ion secondary battery.

The preparation methods of the batteries in Examples 2 to 18, Comparative Example 1, and Comparative Example 2 were the same as that in Example 1, with the differences shown in Table 1.

**Table 1**

| | **Positive electrode sheet** | **Electrolyte** | | | | | |
|---|---|---|---|---|---|---|---|
| | **Positive electrode active material** | **Cyclic carbonate** | **Content of cyclic carbonate (%)** | **Ethylene sulfate additive** | **Content of ethylene sulfate additive** | **Chain solvent** | **Content of chain carbonate (%)** |
| **Comparative Example 1** | NCM811 | EC | 20 | / | / | EMC | 80 |
| **Comparative Example 2** | NCM811 | EC | 25 | Formula I-1 | 0.5 | EMC | 75 |
| **Example 1** | NCM811 | EC | 22 | Formula I-1 | 0.5 | EMC | 78 |
| **Example 2** | NCM811 | EC | 20 | Formula I-1 | 0.5 | EMC | 80 |
| **Example 3** | NCM811 | EC | 17 | Formula I-1 | 0.5 | EMC | 83 |
| **Example 4** | NCM811 | EC | 10 | Formula I-1 | 0.5 | EMC | 90 |
| **Example 5** | NCM811 | EC | 8 | Formula I-1 | 0.5 | EMC | 92 |
| **Example 6** | NCM811 | EC | 5 | Formula I-1 | 0.5 | EMC | 95 |
| **Example 7** | NCM811 | EC | 3 | Formula I-1 | 0.5 | EMC | 97 |
| **Example 8** | NCM811 | EC | 15 | Formula I-1 | 2.3 | EMC | 85 |
| **Example 9** | NCM811 | EC | 15 | Formula I-1 | 2 | EMC | 85 |
| **Example 10** | NCM811 | EC | 15 | Formula I-1 | 1 | EMC | 85 |
| **Example 11** | NCM811 | EC | 15 | Formula I-1 | 0.7 | EMC | 85 |
| **Example 12** | NCM811 | EC | 15 | Formula I-1 | 0.3 | EMC | 85 |
| **Example 13** | NCM811 | EC | 15 | Formula I-1 | 0.1 | EMC | 85 |
| **Example 14** | NCM811 | EC | 15 | Formula I-1 | 0.05 | EMC | 85 |
| **Example 15** | NCM811 | EC | 15 | Formula I-2 | 0.5 | EMC | 85 |
| **Example 16** | LiNi_{0.9}Co_{0.05}Mn_{0.05}O₂ | EC | 15 | Formula I-1 | 0.5 | EMC | 85 |
| **Example 17** | NCM811 | PC | 15 | Formula I-1 | 0.5 | EMC | 85 |
| **Example 18** | NCM811 | EC | 15 | Formula I-1 | 0.5 | DEC | 85 |

### Performance test

### 1. High-temperature storage gas generation

At 60°C, the secondary battery was charged to 4.3 V at a constant current of 1C, and then charged at a constant voltage until the current was 0.05C. At that point, the volume of the secondary battery was tested by a drainage method and recorded as V₀. Then, the secondary battery was placed in a 60°C thermostat, stored for 30 days, and then taken out. At that point, the volume of the secondary battery was tested by the drainage method and recorded as V₁. A volume swelling rate (%) of the secondary battery after storage at 60°C for 30 days was equal to [(V₁-V₀)/V₀]×100%.

### 2. Low-temperature discharge capacity retention rate

At 25°C, the secondary battery was charged to 4.3 V at a constant current of 0.1C, and then charged at a constant voltage until the current was 0.05C, and then discharged to 2.8 V at a constant current of 0.1C. A discharge capacity at that point was recorded as U₁. Then, the secondary battery was charged to 4.3 V at a constant current of 0.1C, and then charged at a constant voltage until the current was 0.05C. After the battery was left standing at -10°C for 2 h, the battery was discharged to 2.8 V at a constant current of 0.1C. A discharge capacity at that point was recorded as U₂. A low-temperature capacity retention rate (%) of the secondary battery at -10°C was equal to (U₂/U₁)×100%.

The test results of Examples 1 to 18, Comparative Example 1, and Comparative Example 2 are shown in Table 2.

**Table 2**

| | **Volume swelling rate at 60°C (%)** | **Low-temperature discharge capacity retention rate (%)** |
|---|---|---|
| **Comparative Example 1** | 28.5 | 89.5 |
| **Comparative Example 2** | 30.5 | 85.4 |
| **Example 1** | 18.9 | 90.3 |
| **Example 2** | 15.3 | 91.3 |
| **Example 3** | 15.1 | 92.1 |
| **Example 4** | 14.9 | 92.6 |
| **Example 5** | 14.6 | 92.8 |
| **Example 6** | 14.3 | 93.1 |
| **Example 7** | 19.1 | 88.5 |
| **Example 8** | 17.2 | 88.3 |
| **Example 9** | 18.1 | 88.9 |
| **Example 10** | 14.8 | 92.5 |
| **Example 11** | 15.3 | 91.6 |
| **Example 12** | 16.7 | 90.3 |
| **Example 13** | 17.1 | 89.9 |
| **Example 14** | 18.3 | 88.5 |
| **Example 15** | 14.9 | 91.6 |
| **Example 16** | 15.8 | 90.4 |
| **Example 17** | 15.5 | 90.2 |
| **Example 18** | 15.9 | 89.6 |

| | | |
|---|---|---|
| Conclusion: From comparison of Examples 1 to 18, Comparative Example 1, and Comparative Example 2, it can be seen that the secondary battery provided in this application can reduce the volume swelling rate of the battery and increase the low-temperature discharge capacity retention rate of the secondary battery, indicating that in this application, the ethylene sulfate additive is added to the electrolyte, and the content of the cyclic carbonate is less than or equal to 22%, so that the gas generation of the secondary battery can be reduced, and the transport rate of lithium ions can be increased. | | |

It can be seen from Examples 1 to 7 and Comparative Example 2 that in this application, adjusting the content of the cyclic carbonate can reduce the volume swelling rate of the secondary battery and increase the low-temperature discharge capacity retention rate of the secondary battery.

It can be seen from Examples 8 to 14 that in this application, adjusting the content of the ethylene sulfate additive can reduce the volume swelling rate of the secondary battery and increase the low-temperature discharge capacity retention rate of the secondary battery.

Finally, it should be noted that the above embodiments are merely intended to describe the technical solutions of this application, and are not intended to limit this application. Although this application is described in detail with reference to the foregoing embodiments, those of ordinary skill in the art should understand that they may still make modifications to the technical solutions described in the foregoing embodiments or make equivalent replacements to some or all technical features thereof. These modifications or replacements do not make the essence of the corresponding technical solutions depart from the scope of the technical solutions of the embodiments of this application, and shall all fall within the scope of the claims and the description of this application. In particular, as long as there is no structural conflict, the various technical features mentioned in the embodiments can be combined in any manner. This application is not limited to the specific embodiments disclosed herein, but includes all technical solutions falling within the scope of the claims.

## Claims

1. A secondary battery, comprising:
a positive electrode sheet;
a negative electrode sheet;
a separator, wherein the separator is disposed between the positive electrode sheet and the negative electrode sheet; and
an electrolyte, wherein the electrolyte comprises a solvent and an ethylene sulfate additive, and the ethylene sulfate additive comprises a structural unit represented by Formula I: 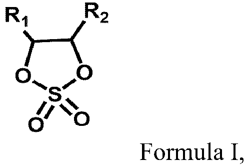
wherein R₁ and R₂ each independently comprise one or both of a hydrogen atom or an ethylene sulfate group; the solvent comprises cyclic carbonate; and based on a total mass of the solvent, a mass percentage of the cyclic carbonate is less than or equal to 22%.

2. The secondary battery according to claim 1, wherein the ethylene sulfate additive comprises: one or both of 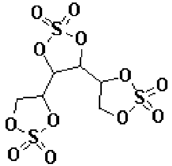 Formula I-1 or 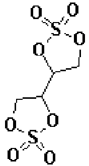 Formula I-2.

3. The secondary battery according to claim 1 or 2, wherein based on a total mass of the electrolyte, a mass percentage of the ethylene sulfate additive is less than or equal to 2%.

4. The secondary battery according to any one of claims 1 to 3, wherein based on a total mass of the electrolyte, a mass percentage of the ethylene sulfate additive is 0.1% to 1%.

5. The secondary battery according to any one of claims 1 to 4, wherein based on a total mass of the electrolyte, a mass percentage of the cyclic carbonate is 5% to 22%.

6. The secondary battery according to any one of claims 1 to 5, wherein the cyclic carbonate comprises one or more of ethylene carbonate, propylene carbonate, butylene carbonate, and vinylene carbonate.

7. The secondary battery according to any one of claims 1 to 6, wherein the cyclic carbonate comprises ethylene carbonate.

8. The secondary battery according to any one of claims 1 to 7, wherein the solvent further comprises chain carbonate.

9. The secondary battery according to claim 8, wherein the chain carbonate comprises at least one of diethyl carbonate and ethyl methyl carbonate.

10. The secondary battery according to any one of claims 1 to 9, wherein the electrolyte further comprises a negative electrode film-forming additive.

11. The secondary battery according to claim 10, wherein the negative electrode film-forming additive comprises one or both of fluoroethylene carbonate.

12. The secondary battery according to claim 11, wherein one or more of the following conditions are satisfied:
based on a total mass of the electrolyte, a mass percentage of the fluoroethylene carbonate is 0.1% to 3%; and
based on the total mass of the electrolyte, a mass percentage of the vinylene carbonate is 0.1% to 1%.

13. The secondary battery according to any one of claims 1 to 12, wherein the positive electrode sheet comprises a positive electrode active material, and the positive electrode active material comprises a lithium-containing layered oxide.

14. The secondary battery according to claim 13, wherein the positive electrode active material comprises a transition metal element; and the positive electrode active material comprises one or more of the nickel element, the cobalt element, the manganese element, and the aluminum element, wherein a molar proportion of the nickel element in all metal elements other than lithium is greater than or equal to 80%.

15. The secondary battery according to claim 14, wherein the transition metal element comprises the nickel element, the cobalt element, and the manganese element.

16. The secondary battery according to claim 14 or 15, wherein a ratio of a mass percentage of the ethylene sulfate additive in the electrolyte to the molar proportion of the nickel element in all metal elements other than lithium is 0.1 to 3.

17. The secondary battery according to any one of claims 13 to 16, wherein based on a total mass of the positive electrode sheet, a mass percentage of the positive electrode active material is greater than or equal to 95%.

18. The secondary battery according to any one of claims 1 to 17, wherein one or more of the following conditions are satisfied:
a compacted density of the positive electrode sheet is 3.2 g/cm³ to 3.8 g/cm³; and
a coating weight of the positive electrode sheet is 0.24 g/1540.25 mm² to 0.32 g/1540.25 mm².

19. The secondary battery according to any one of claims 1 to 18, wherein an upper limit cut-off voltage of the secondary battery is greater than or equal to 4.2 V.

20. An electric device, comprising the secondary battery according to any one of claims 1 to 19.
